# EUROPEAN PATENT APPLICATION

(11) **EP 4 289 570 A1**
(43) Date of publication of application: **13.12.2023**
(21) Application number: 23178074.3
(22) Date of filing: 07.06.2023
(51) Int. Cl.: B25J 9/16, G05B 19/42

(54) **METHOD AND SYSTEM FOR DEFINING WAYPOINTS ON A WORKPIECE**

(30) Priority: 07.06.2022 NL 2032086
(71) Applicant: HGR Tec B.V., 3299 LL Maasdam (NL)
(72) Inventor: van Rooij, Max Johannes Maria, 3993 RK Houten (NL); Herweijer, Albert, 3299 LL Maasdam (NL)
(74) Representative: Arnold & Siedsma

(57) **Abstract**

The present disclosure relate to a method for defining a location of a waypoint or a workpiece, wherein use is made of a robot arm comprising:
a stationary base;
links of which one is attached to the stationary base; and
joints forming interconnections between said links;

a reference point indicator element connected to or formed with the robot arm;
a direction-indicator connected to the robot arm; and
a controller configured to determine the location of the reference point indicator element and the direction indicator;
wherein the method comprises:
determining a reference plane determined using the reference point indicator element;
determining the orientation and location of the direction-indicator when the direction-indicator has been positioned to cause an imaginary line to point towards the waypoint;
determining based on the determined reference plane and the determined orientation and location of the direction-indicator, the location of said waypoint as the location of the intersection point between the imaginary line and the reference plane.

## Description

### TECHNICAL FIELD

The disclosure concerns a method and device for defining a location of each waypoint from a set of one or more waypoints on a workpiece arranged on a support. The disclosure also concerns a method of operating a robot device and to a robot device.

### BACKGROUND

Automation using robot devices has proven a useful approach for working more efficiently. Robot devices can perform work faster, with greater precision, and for longer stretches of time than craftsmen can. Once configured for a particular task, robot devices can perform large amounts of work. This reduces labour costs, and, if the work performed is not without risk, also increases safety.

However, to properly configure a robot device is well known to be a complex task. Foremost, the skills of an experienced craftsman are required to formulate the work that is to be performed. And since robot devices are becoming increasingly complex, the skills of a programmer or computer specialist may be required to translate this work into a language that the robot device understands. Consequently, properly configuring a robot device can be a substantial investment. This investment is worth it when setting up a robot device when working on large projects. However, even with state-of-the-art robot devices, it is not always the case that the cost of properly configuring a robot device out weights the gain in efficiency when working on a small project (i.e. when work has to be done on a relatively small amount of workpieces).

It is therefore a goal of the invention to provide a method using a robot device, and/or a robot device for performing work on a workpiece, in which configuring the robot device can be done faster, and with limited technical understanding of the robot device. It is a further goal to provide these, in a way suitable for working on small projects.

One aspect of configuring a robot device to perform interaction with a workpiece, for instance work on a workpiece such as by having an end effector (for instance a tool flange) of the robot device perform an action on one or portions of the workpiece such as welding the one or portions thereof in case the end effector comprising a welding torch, is defining a set of one or more waypoints on said workpiece. The waypoints define the exact locations where end effector is to interact with the workpiece. In some examples the end effector interacts with the workpiece at the waypoints only. In other examples the waypoints define on or more trajectories (herein also referred to as routes) the end effector is to travel during interaction with the workpiece.

Many state-of-the-art methods rely on the assumption that waypoints can be derived from structural aspects and/or the shape of the workpiece. Imaging devices like 3D cameras are used to generate a representation of the workpiece in the digital domain, and this representation of the workpiece is analysed to automatically detect waypoints. Automatically detected waypoints can for example be located at either end of a workpiece, or on a particular corner thereof. These methods do not allow for waypoints to be positioned freely.

These state-of-the-art methods may also rely on digital representations of a workpiece such as computer assisted drawings. These representations are not always available, and, similar to the problem described with programming the robot arm, making and using such digital representations requires skills very different from that of a craftsman. For instance, programming skills for programming a robot device is completely different from skills required for working on a physical workpiece, like welding the workpiece.

Additionally, in these state-of-the-art methods trajectories calculated for the end effector to follow are based on general representations of the robot arm as well. Therefore, while the trajectory can be provided to any robot device, these robot devices will still require calibration to fit the trajectory to this particular device.

Other state-of-the-art methods rely on a user showing the robot device how to move while performing the desired task. The user moves an end effector along a trajectory to be followed, and the robot device meanwhile registers the movements and/or positions of the end effector. To perform the desired work, the trajectory shown to the device by the user is simply repeated. If a lot of waypoints have to be indicated and if these are far apart, these methods become very time consuming. The user also has to be able to see and reach all positions that the end effector has to undergo while performing the desired work. For large or complex workpieces, this can be very cumbersome, if not even impossible.

It is therefore a goal of the invention to provide a method using a robot device, and/or a robot device for defining a location for each waypoint from one or more waypoints, in which waypoints can be more freely positioned and wherein the user does not have to approach the waypoints.

### SUMMARY OF THE INVENTION

The abovementioned objects are at least partially achieved in a method for defining a location of each waypoint from one or more waypoints according to claim 1. In this method, use is made of a robot device comprising:
- a robot arm comprising:
   a stationary base;
   a plurality of links of which one is attached to the stationary base; and
   a plurality of joints forming interconnections between said links;
- a reference point indicator element connected to or formed with the robot arm;
- a direction-indicator connected to or formed with the robot arm; and
- a controller configured to determine the location, optionally also the orientation, of the reference point indicator element and the direction indicator.

The claim defines a method comprising:
- determining by the controller a reference plane extending through the one or more waypoints based on at least three reference locations determined using the reference point indicator element;
for each of the one or more waypoints for which a location is to be defined:
- determining by the controller the orientation and location of the direction-indicator when the direction-indicator has been positioned to cause an imaginary line extending from the direction-indicator to point towards the waypoint;
- determining by the controller and based on the determined reference plane and the determined orientation and location of the direction-indicator, the location of said waypoint as the location of the intersection point between the imaginary line and the reference plane.

The imaginary line may be a line of sight from the direction-indicator (for instance, a laser generator, a visor, a light projector, an imaging device and the like) to the waypoint.

In embodiments wherein the robot arm is configured to allow the reference point indicator element to be moved by the operator to physically contact the workpiece at each of the reference locations, the determining by the controller of a reference plane extending through the one or more waypoints may comprise:
- positioning the reference point indicator element at at least three distinct reference locations on the workpiece;
- determining the at least three distinct reference locations from the respective position of the reference point indicator element, and
determining the reference plane based on the at least three reference locations.

In further embodiments the reference point indicator element comprises a contact surface, Positioning the reference point indicator element at the at least three distinct reference locations then may comprise consecutively moving the contact surface of the reference point indicator element to contact the workpiece at each of the at least three distinct workpiece reference locations.

The reference point indicator element may be a part of the robot arm and this part may comprise a 3D imaging device configured to acquire (i.e. collect/receive) image information of the workpiece forming a 3D map of the workpiece (i.e. a three-dimensional virtual representation of the workpiece, expressed in a point cloud representative of the workpiece). This 3D imaging device may be a depth camera (herein also referred to as a 3D camera) configured to determine a 3D map detected visual information, an acoustic imaging device configured to determine a 3D map of the workpiece from detected sound information, and the like. The reference plane in these embodiments may be based on at least three reference locations determined or selected by the operator from the (points of the point cloud of the) 3D map. An advantage of these embodiments is no physical contact is needed, only a 3D map of the workpiece is required.

In embodiments of the present disclosure wherein the reference point indicator element comprises a 3D imaging device, the determining of a reference plane extending through the one or more waypoints based on at least three reference locations determined using the reference point indicator element comprises:
- acquiring by the 3D imaging device of image information of the workpiece to generate a 3D map of the workpiece;
- generating by at least one of the 3D imaging device or the controller a 3D map of the workpiece;
- receiving by the controller information representative of at least three reference locations from the 3D map; and
- determining the reference plane based on the received at least three reference locations.

In embodiments of the present disclosure the direction-indicator comprises a laser generator configured to emit at least one laser beam of visible laser light essentially along the imaginary line.

In embodiments wherein the direction-indicator comprises a laser generator configured to emit at least one laser beam of visible laser light, the method comprises emitting the at least one laser beam of visible laser light essentially along the imaginary line. In embodiments wherein the laser generator is configured to emit two converging laser beams of visible laser light, the method comprises emitting the two converging laser beams of visible laser light so as to intersect in a point on the imaginary line.

In embodiments the direction-indicator comprises a light projector the method comprises projecting light from the light projector along the imaginary line. This light is visible light of any frequency or frequency range(s) in the visible light spectrum.

In embodiments of the present disclosure the direction-indicator comprises an imaging device, for instance a 2D camera, arranged to acquire one or more images in the indicated direction, the method comprises acquiring one or more images using the imaging device. The method may further comprise displaying the one or more acquired images together with an indication of where in the acquired image the imaginary line is.

In embodiments of the present disclosure wherein the imaging device has a focal point and the intersection point of the two laser beams coincides with said focal point, the method comprises determining the intersection point when the waypoint is at the focal point of the imaging device.

In embodiments of the present disclosure the method comprises storing and/or retrieving information representative of the determined reference plane on or from a storage medium. The method may further comprise determining the intersection point between the imaginary line and the determined reference plane based on both the location and the orientation of the direction indicator and on the information representative of the determined reference plane stored on the storage medium.

The method may further comprise determining respective locations of two or more waypoints and determining one or more trajectories between the waypoints for the end effector to follow when interacting with the workpiece. Determining the one or more trajectories between the waypoints for the end effector to follow may further comprise determining from image information received from an imaging device an optimal orientation of the end effector relative to the workpiece when the end effector travels along the trajectory.

The trajectory may be generated based on the one or more waypoints and a trajectory template. The trajectory template may be one or more of:
a line template, based on which a trajectory is generated that passes through each of the one or more waypoints, preferably in order in which the locations of the one or more waypoints were defined;
a boundary-only polygon template, based on which a trajectory is generated that starts and ends at the same waypoint, and passes through each of the one or more waypoints, preferably in an order in which the locations of the one or more waypoints were defined; and
a closed-polygon template, based on which a trajectory is generated that covers the interior, and preferably also the boundary of a simple polygon defined by the one or more waypoints.

Generating the trajectory may further comprise determining an angle at which the end effector approaches the workpiece when being moved along the trajectory. The angle of approach may be determined based on the trajectory template.

In embodiments of the present disclosure wherein the robot device comprises an imaging device, for instance a 2D camera, arranged to acquire image data representative of the shape and size of the workpiece, the method may comprise:
- acquiring image data representative of the shape and size of the workpiece using the imaging device; and
- determining the angle of approach based on the acquired image data.

The end effector as defined herein may comprise at least one of a welding or soldering torch, a circle saw or jig saw, a drill, a glue gun, a sanding-tool, grinding tool, a cleaning laser, or other processing tool.

A method of operating a robot device is provided as well. This method comprises:
- determining one or more trajectories between locations of waypoints on a workpiece, wherein the locations of the waypoints are preferably determined in a manner as described herein;
- causing a robot arm to move an end effector along the one or more trajectories, preferably in a determined orientation, while the end effector is caused to interact with the workpiece.

The interaction between the end effector and the workpiece may comprise at least one of welding, soldering, sawing, drilling, gluing, sanding, grinding, or cleaning.

The abovementioned objects are at least partially achieved as well in a robot device comprising
- a robot arm comprising a stationary base, a plurality of links of which one is attached to the stationary base, and a plurality of joints forming interconnections between said links;
- a reference point indicator element connected to or formed with the robot arm;
- a direction-indicator connected to or formed with the robot arm; and
- a controller configured to determine the location, optionally also the orientation, of the reference point indicator element and the direction indicator, wherein the controller is configured to perform the method as defined herein.

In embodiments of the present disclosure the robot arm is further configured to allow the reference point indicator element to be movable to physically contact the workpiece at each of the reference locations, wherein the reference point indicator element preferably comprises a contact surface configured to be moved into contact with the workpiece.
In embodiments of the present disclosure

In embodiments of the present disclosure the reference point indicator element comprises a 3D imaging device.

In embodiments of the present disclosure the direction-indicator comprises at least one of:
- a visor;
- a light projector;
- an imaging device, for instance a 2D camera;
- a laser generator configured to emit at least one laser beam of visible laser light essentially along the imaginary line;
- a laser generator is configured to emit two converging laser beams of visible laser light, wherein the laser generator is preferably further configured to emit the two laser beams to intersect in a point on the imaginary line.

In embodiments of the present disclosure the robot arm comprises an end effector configured to perform interaction with the workpiece, wherein the interaction preferably is at least one of the following: welding, soldering, sawing, drilling, gluing, sanding, grinding, or cleaning.

In the claimed method, the direction-indicator may form a connection between the physical domain and the digital domain. In the physical domain, a user can point out where a waypoint is to be defined by positioning the direction-indicator such that a desired location for said waypoint lies in line with the indicated direction. In the digital domain, the robot device is made aware of where at least part of the workpiece is by defining the reference plane, and can derive the location pointed out by the user on the workpiece by starting from the position of the direction-indicator, and extending the imaginary line from the direction-indicator in the indicated direction.

A user can define a location for each waypoint from the one or more waypoints when knowing how to position the direction-indicator. This method has the further advantage of allowing a user to freely point out waypoints. This method has the further advantage of allowing a user to point out waypoints over long distances, and thus does not require a user to approach every waypoint or come into contact with the workpiece. This method is also advantageous because defining waypoints on the actual workpiece allows to compensate for real-world defects, deviations and alterations of the actual workpiece that are not present in a theoretically ideal digital representation.

### BRIEF DESCRIPTION OF THE FIGURES

Further details and advantages are detailed in relation to the accompanying figures, in which:
figure 1 shows, in an isometric perspective, a robot arm of a robot device that may be used for a method according to the invention;
figure 2a-c show, in varying perspectives, a robot device and workpiece similar to those shown in figure 1;
figure 3a-b each show, in isometric perspective, a workpiece and a reference plane;
figure 4 shows, in isometric perspective, a robot device similar to that shown in figures 1 and 2a-c;
figure 5 shows, in isometric perspective, a workpiece similar to that shown in figures 1, 2a-c, and 3a-b, and multiple waypoints indicated thereon;
figure 6a-c each show a plurality of waypoints and a trajectory, generated based thereon;
figure 7a-b each show a workpiece, waypoints indicated thereon and a trajectory, generated based thereon.
figure 8 shows, in sideview, two laser beams emitted from the laser device and the imaginary line extending from the direction indicator, wherein the laser beams intersect at a distance from the (imaging device of the) end effector corresponding to the focal length of the imaging device.
figure 9a-b each show images acquired by the camera of the end effector shown in figure 8.

### DETAILED DESCRIPTION OF EMBODIMENTS

In the following description, for the purposes of explanation, numerous specific details are set forth in order to provide a thorough understanding of the present invention. It will be apparent, however, that the present invention may be practiced without these specific details. In other instances, well-known structures and devices are not described in exhaustive detail, in order to avoid unnecessarily obscuring the present invention.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope of the present invention. Any recited method can be carried out in the order of events recited or in any other order which is logically possible.

In the context of this application, a location of a point on a workpiece or robot component may be described by a set of three coordinates defining where the point is in space (e.g. X, Y, and Z coordinates of a reference coordinate system). A waypoint, for example, has a location.

Additionally, a position of a work piece or robot component may be described by its location in combination with its orientation. The orientation of a workpiece or component may be described by a set of two coordinates defining in what direction the workpiece or component is pointing (e.g. elevation angle and azimuthal angle of a reference coordinate system). An end effector such as a welding torch, or a positioning element, has a position.

In the same context, changing the position of a work piece or robot component (or, alternatively phrased: positioning a work piece or a robot component) may include changing either its location, its orientation, or both.

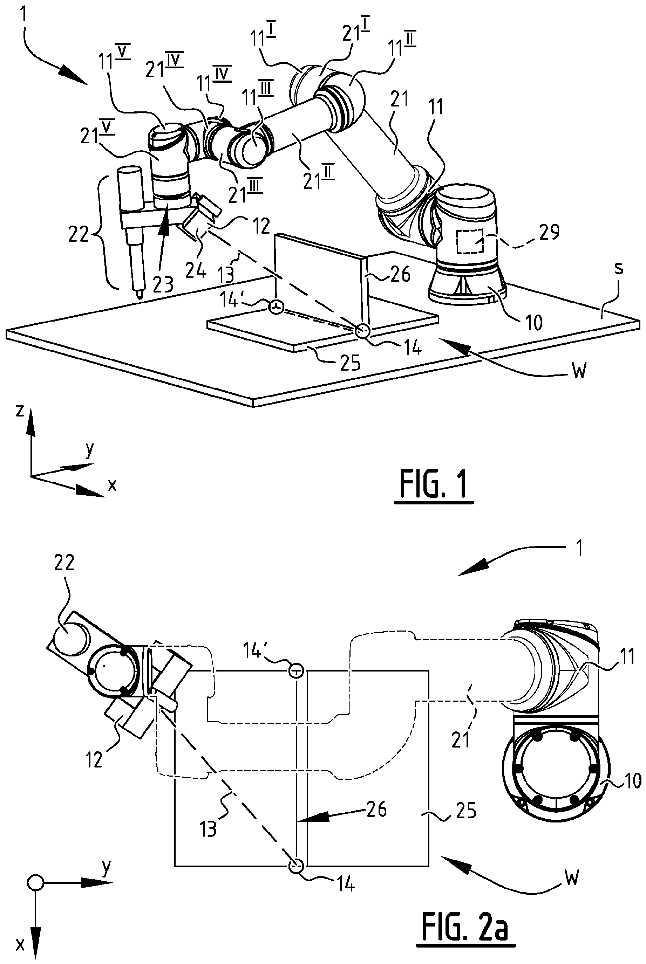

Figure 1 shows a stationary support (s), for instance a support table, for supporting workpiece W. The support (s) is shown to support a robot arm 1 of a robot device as well. The robot arm 1 comprising a stationary base 10 fixedly connected to the stationary support (s), a connector 23 for connection of an end effector 22, and a plurality of arm portions or links 21-21^{v} and associated joints 11-11^{v} mutually connecting the arm portions or links. More specifically, the first link 11 is connected to the base 10, and the last link 11^{v} is connected to the connector 23. On the connector 23 of the robot arm is provided a direction indicator 12. In the embodiment of the figures, the direction indicator 12 comprises an imaging device 38, such as a camera, a laser beam generator 24, and the earlier-mentioned end effector 22. The end effector 22 is the part of the robot device that is configured to interact with the environment, in this case with the workpiece (W). The end effector 22 may be a working tool 22 like a welding torch, the latter being configured to weld one or more portions of the workpiece (W).

The robot device may further comprise a controller, for instance the electronic controller 29 shown in dashed lines in figure 1 and connected to a storage medium (not shown), several actuators (not shown) actuating movement of the robot arm, the laser beam generator 24 and to the imaging device 38, that is configured or configurable to perform the computational steps necessary for performing the method according to the invention.

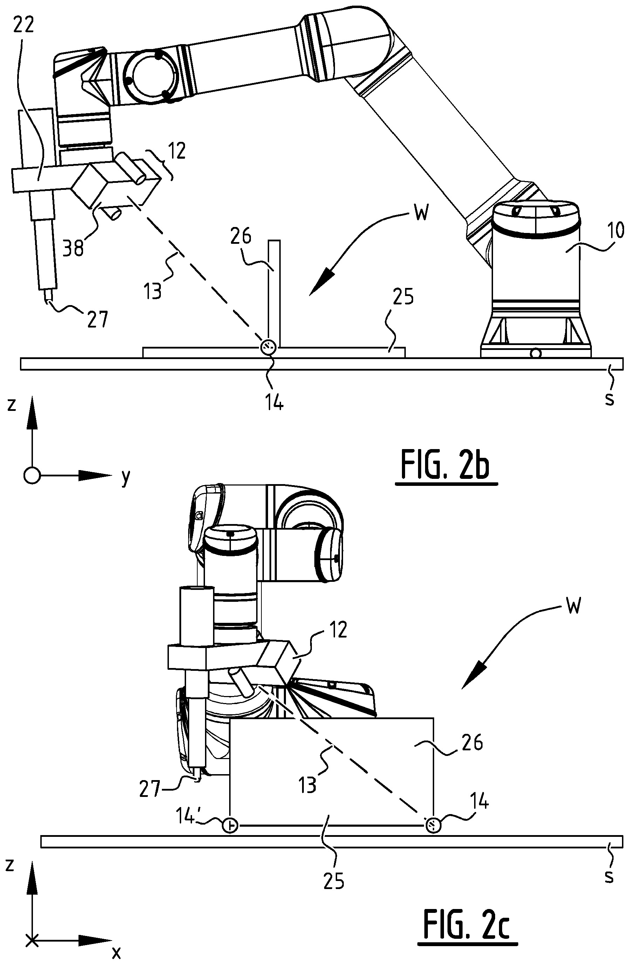

Figures 2a-c each show the robot device and workpiece W of figure 1, but from different perspectives. These figures, by themselves and together, visualize how the position of direction indicator 12 can be used to determine the location of waypoint 14. Figure 2a shows this scene from a top-down perspective. Figure 2b shows this scene from a side-perspective. Figure 2c shows this scene from a front perspective.

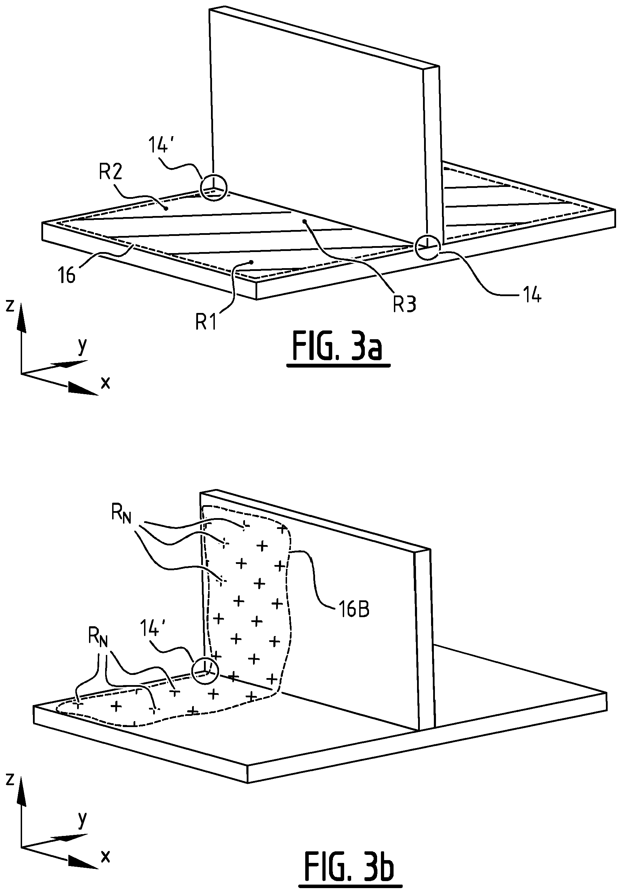

Figures 3a-b each show workpiece W and an imaginary reference plane 16. In the shown example, the upper surface of the horizontal slab 25 is taken as the imaginary reference plane 16. However, any arbitrary plane or even any non-planar surface may be taken as the imaginary reference plane 16 as defined herein. Preferably, the imaginary reference plane 16 is chosen to be a reference plane that extends through each of the one or more waypoints where the end effector is to interact with the workpiece (W). The exact position of the waypoints then can be determined using the localisation method defined herein.

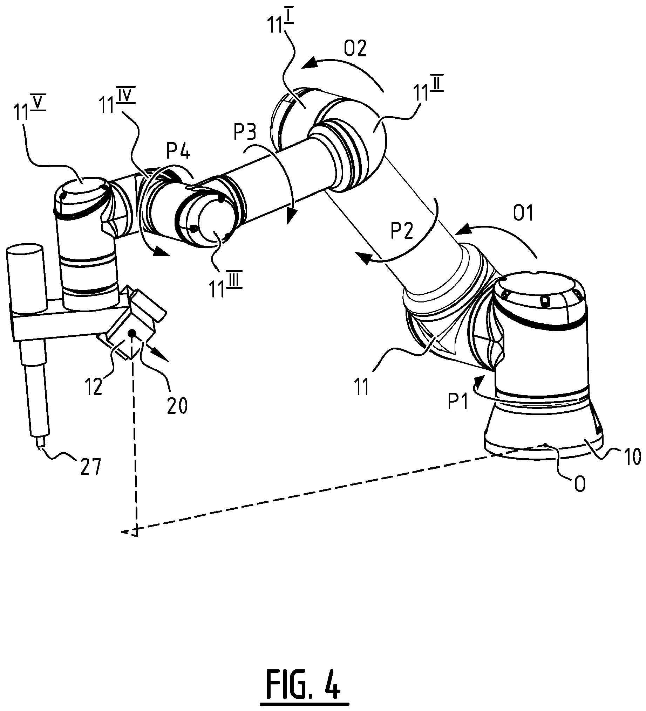

The position of the imaginary reference plane, for instance the position of the imaginary reference plane with respect to a stationary coordinate system (such as an X, Y, Z coordinate system having its origin (O, cf. figure 4) at the base 10 of the robot device 1) can be made known to the robot device in various manner. A preferred example of how to easily determine the position of the imaginary reference plane is as follows.

Referring to figure 3a-3b, (at least) three reference points R1-R3, each with a distinct location, are used to define the imaginary reference plane 16. Since in the shown example each of these reference points is located on the substantially horizontal surface of the horizontal slab 25 of the workpiece (W), an imaginary reference plane 16 defined by the reference points R1-R3 will coincide with said horizontal surface. In figure 3b an alternative reference plane 16B is shown. This alternative reference plane 16b is defined by a first set of reference points coinciding with the surface of the horizontal slab 25 and a second set of reference points coinciding the surface of the vertical slab 26. More in general, the reference plane 16, 16B may be defined by a plurality of N reference points R_{N}, each with distinct locations, with N=3, 4, 5, etc.

The locations of the reference points R1-R3 can be defined, for example, by consecutively moving a reference point indicator element 27 of the robot device, preferably a reference point indicator element 27 attached to an end of the robot arm, to each of these reference points. The reference point indicator element 27 may be formed by a predefined portion of the end effector 22, for instance the tip of the welding torch of figure 1. Alternatively, the reference point indicator element 27 is formed by a separate element comprising a contact surface for suitable contacting the surface of the workpiece (W). The user may grip the end effector 22 or the reference point indicator element 27 and move the same (manually or by appropriately controlling the actuators for actuating the arm) to each of the intended reference points R1-RN, for instance by pushing the reference point indicator element 27 (for instance the tip of the end effector) to touch the surface of the working piece. Once arrived at reference point, the controller of the robot device 1 can calculate the location of the tip of the end effector 22 in the digital domain from the kinematic chain formed between stationary base 10 and the end effector 22. Based on the respective positions of the tip 27 of the end effector 22 the respective reference points (i.e. reference locations) R1-R3 and from the respective reference points R1-R3 the position of the reference plane 16 can be determined by the controller. Information about the locations of the reference points R1-R3 and/or the location of the reference plane is then stored, for instance in a storage medium (not shown) of the controller. Even from three relatively close but distinct points, the reference plane can be derived accurately over the full digital domain.

The reference locations are not the same as waypoints. (Although reference locations and waypoints may coincide.) The reference locations are there to be able to determine a reference plane. This means that the reference locations can be chosen more freely than waypoints, as the locations that have to be determined for the waypoints are generally prescribed by technical considerations, depending on the work that has to be performed and/or the function of the robot arm. In each of the embodiments described in this application, locations for waypoints are determined using, and therefore necessarily determined after determination of the reference plane.

The above-described method of having the user directly (i.e. manually) or indirectly (i.e. by controlling the robot arm's actuators) move the end effector and arranging the tip of the end effector to contact the workpiece at the intended location or directly next to the intended location, provides a simple, user-intuitive and robust manner of defining a suitable reference plane 16. Furthermore, it is advantageous that the user does not have to move around the workpiece.

In the above-described embodiment it is particular advantageous to attach the earlier-mentioned direction-indicator and the end effector 22 to the same part (e.g. the connector 23 or the same link) of the robot arm

However, it is also possible to determine the reference points and/or the reference plane in an alternative manner. In some embodiments, the reference point indicator element 27 comprises a depth camera. These depth cameras acquire a plurality of values representing a distance between the depth camera and a corresponding plurality of points. This plurality of points is also sometimes referred to as a point cloud. By positioning the reference point indictor element such that the depth camera points towards the workpiece, a user ensures that in the physical domain this plurality of points is a plurality of points on the workpiece. The position of the reference point indicator element 27 and the acquired values may then be used to determine where these points are in the digital domain. Once the locations of these points are known, three or more points thereof can be selected to be used as reference locations on the workpiece, and the reference plane can be based thereon. Preferably, all points from the point cloud are used.

This embodiment is particularly advantageous because multiple reference points can be determined while only having to position the reference point indicator element 27 once.

As shown in figure 3b, embodiments are also conceivable in which the reference plane 16B is not completely flat, but in which it approximately follows the shape of the workpiece.

Once the reference plane has been determined, reference plane information representative for the reference place is stored on the storage medium of the robot arm controller. This reference plane information can be retrieved in a later stage and can be used to determine the exact locations of the waypoints.

The user may want to input the waypoints into the robot arm controller so that the controller may determine the trajectory or trajectories the end effector is going to travel during interaction of the end effector with the workpiece. More specifically, in embodiments of the present disclosure, the controller is configured to allow easy input of the waypoints, accurate determination of the trajectory the end effector is to move along during interaction with the workpiece and, optionally, to allow easy and accurate determination of the orientation(s) (relative to the support or the workpiece) the end effector is to assume during movement along the trajectory. In case the end effector comprises a welding torch for welding parts of the workpiece, the controller is configured to determine an optimal trajectory for the welding torch to follow during the welding operation of the workpiece. In some embodiments not only the locations (forming the trajectory) of the welding torch for properly welding the workpiece are determined, but also an optimal orientation or (varying) orientations of the welding torch during the movement of the welding torch along the trajectory can be determined.

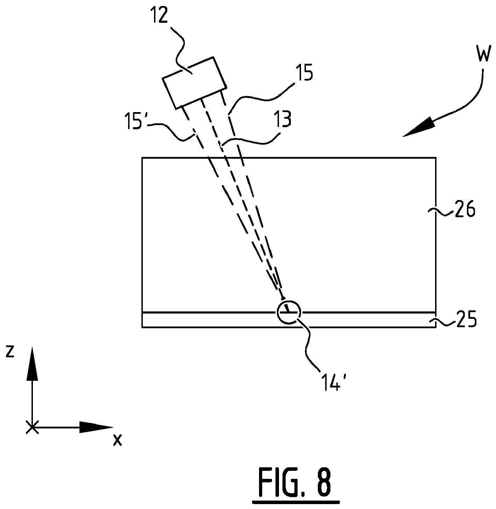

Input of one or more waypoints can be accomplished as follows. The user positions (in a direct or indirect manner) the direction indicator 12 connected to the free end or close to the free end of the robot arm towards an intended first waypoint. In other words, the user changes the position (including the location and orientation) of the direction indicator 12 in such a way, that an imaginary line 13 extending from the direction indicator (preferably an imaginary line 13 extending perpendicular to the front surface of the direction indicator 12 as is shown in figures 1, 2a-2c, 4 and 8. However, the imaginary line 13 may be extend obliquely relative to the direction indicator 12) points exactly towards the intended waypoint. When the imaginary line 13 properly points to the location on the workpiece where the first waypoint is to be defined, the imaginary line 13 intersects the earlier-defined reference plane 16, 16B exactly at the position of the intended waypoint. Once the user has appropriately positioned the direction indicator 12, the controller can calculate the location of the waypoint based on the prestored reference plane information and information about the current position (the current location and orientation of the direction indicator 12) of the direction indicator 12.

In the context of this application, for imaginary line 13 to extend from the direction indicator 12 may be understood as said line starting at the direction indicator and extending in a particular direction, beyond said indicator, ad infinitum.

More specifically, in some embodiments of the present disclosure, the controller 29 is configured to determine the location and direction of the origin of the imaginary line 13 based on sensory information of sensors provided in the robot arm, for instance a number of angle sensors configured to measure the angle between consecutive portions (i.e. links 11-11^{v}, base 10, connector 23, etc.) of the robot arm so that the controller 29 is able to determine at all times the current position (i.e. location and orientation) of any of the portions of the robot arm (especially of the direction indicator 12 and the end effector 22). Then based on the location of the direction indicator, and the direction of the imaginary line 13, the controller 20 can determine the location of the intersection point of the imaginary line 13 and the reference plane 16, which location of the intersection point in turn corresponds to the location of waypoint 14 that was to be defined. This location can be stored in the storage medium as waypoint information. The stored waypoint information therefore comprises information representative of the location of the waypoint (for instance the location of the waypoint relative to the earlier-mentioned origin (O) of the stationary coordinate system).

This process of the user directing the direction indicator 12 towards a waypoint to be defined and having the controller then determine therefrom the location of the associated waypoint, can be repeated for all waypoints. The user only needs to consecutively direct the direction indicator 12 towards the associated waypoint and the controller automatically determines its location and stores the same on the storage medium.

Note that only information is to be obtained about the intersection of the imaginary line 13 and the reference plane 16, 16A. In principle the distance between the direction indicator 12 and the workpiece (W) is not essential: the user can position the direction indicator 12 at any distance from the workpiece as long as the intended waypoint is in the line of sight, represented by the imaginary line 13 originating from the direction indicator 12. Depending on the user's own wishes or preferences the distance between the direction indicator 12 and the workpiece (W) or the height of the direction indicator 12 relative to the (support of the) workpiece may be varied (by the user). This freedom to position the direction indicator 12 at basically any position relative to the workpieces makes it very easy, reliable and efficient for a user to input waypoints into the controller.

The direction indicator 12 may be embodied in various different manners. In an embodiment of the present disclosure the direction indicator comprises a vizor arranged on the robot arm for a user to look in the indicated direction (in principle along the imaginary line 13) when looking through or along the vizor. The user may target the waypoint to be defined by pointing the vizor towards the location of said waypoint to be defined, whereafter the controller may determine the waypoint position in the manner described above.

In other embodiments the direction-indicator 12 comprises a laser beam generator 24 configured to emit at least one a laser beam of visible laser light essentially along the imaginary line 13 (i.e. coinciding with the imaginary line 13 or running parallel to the imaginary line 13). The user can appropriately position the direction indicator 12 by visually following the laser spot shown on the workpiece (W). As soon as the laser spot of the laser beam coincides with the intended location of the waypoint, the controller is instructed (for instance by the user depressing a key or performing a similar action) to start calculating the location of the waypoint. Also in this embodiment the distance between the direction indicator 12 and the workpiece is irrelevant for being able to calculate the waypoint location.

In some embodiments the direction indicator 12 may also comprise an imaging device 38, for instance a camera, arranged to acquire one or more images of the workpieces when the direction indicator 12 is arranged so as to be directed towards a waypoint to be defined. Image data representative of the image of the workpiece may be stored in the storage medium. The image data may be used by the controller 12 to determine the shape and/or dimensions of (a relevant part of) the workpiece. This information can be used in a subsequent stage wherein the controller determines one or more routes or trajectories the end effector is to move along during the interaction of the end effector with the workpiece. For instance, the controller may be configured to determine from the acquired image data the optimal (varying or static) orientation of the end effector relative to the workpiece during travelling of the end effector along the determined trajectory.

In some embodiments the direction indicator 12 may also comprise a projector, arranged to project a shape in the indicated direction.

In case the imaging device 38 is a camera, it may be preferably to keep the camera of the direction at a predefined distance (in practice, in a predefined distance range). For instance, should the distance between the camera and the waypoint on the workpiece correspond to the focal distance of the (lens system of the) camera, the image quality of the acquired images will be relatively high. In order to assist the user to keep a preferred distance basically corresponding with the focal distance of the camera between the camera and the waypoint to be determined, the direction indicator 12 may comprise a laser generator configured to emit two converging laser beams of visible laser light. In this embodiment the laser beam generator is further configured to emit the two laser beams to intersect in a point on the imaginary line. When the laser beam generator is configured to have this intersection point to coincide with the focal point of the imaging device, it becomes easy for the user to properly position the direction indicator 12: by just moving the robot arm so that the combined spot of the two laser beams coincides with the intended waypoint, it is assured that not only the locations of the waypoints and the trajectories following from these waypoint may be calculated but also that the imaging device is able to provide sufficiently accurate images of the workpiece to determine the optimal orientation of the end effector during interaction with the workpiece.

Figure 4 shows the robot device, which again includes stationary basis 10 and direction-indicator 12. It also shows how the robot device, or specifically the robot arm, may comprise a plurality of joints 11, 11', and 11" which interconnect a plurality of links. The figure visualizes how these joints and links form a kinematic chain, starting at origin O that coincides with stationary base 10, and which extends up to direction-indicator 12. By considering the states of the joints, some of which are shown by arrows O1, O2, P1, P2, P3, P4, the robot device can derive a position 20 of direction indicator 12.

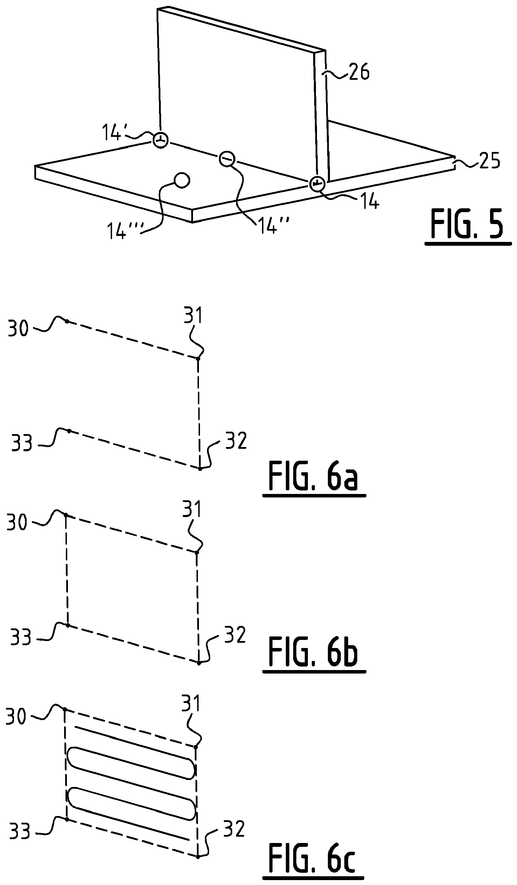

Figure 5 shows workpiece (W) and a plurality of waypoints 14, 14', 14", and 14‴ defined on one or more surfaces of the workpiece (W). From the prior art, systems are known which automatically recognize locations at the outer surface of the workpiece to define as waypoints. These systems can generally only determine waypoints that coincide with one or more structural aspects of the workpiece, i.e. structural parts of the workpiece. Examples of such waypoints are waypoints 14 and 14' shown in the figures. These are located at the opposing outer ends of the contact line between the horizontal slab 25 and the vertical slab 26 making up the workpiece W.

Using the method disclosed herein, however, also allows for freely pointing out waypoints. As such, the user can point out waypoint 14", located at the contact line between the two slabs, but not on any end thereof. The user may also want to point out waypoints 14‴, located at a location not necessarily easily derivable from any structural aspects of the workpiece at all, but anywhere on a surface. In fact, a waypoint can be defined at any arbitrary position on (or close to) the surface of the workpiece (W).

Figures 6a-c show how four waypoints 30, 31, 32, 33, can be interconnected by (imaginary) line segments so as to provide one or more different routes or trajectories for the end effector to follow based on one or more prestored templates (for instance prestored in the storage medium of the controller). In figure 6A, the route or trajectory extends along each of the waypoints once. The user can control in what order these are passed. In a preferred embodiment wherein the waypoints are passed in the order indicated. In figure 6B, the waypoints are combined in order to form a trajectory in the shape of a closed polygon (i.e. having a closed interior and without sides that cross each other). In figure 6C, the waypoints are combined to form a route or trajectory that fills or covers the entire surface delineated by the waypoints 30-32.

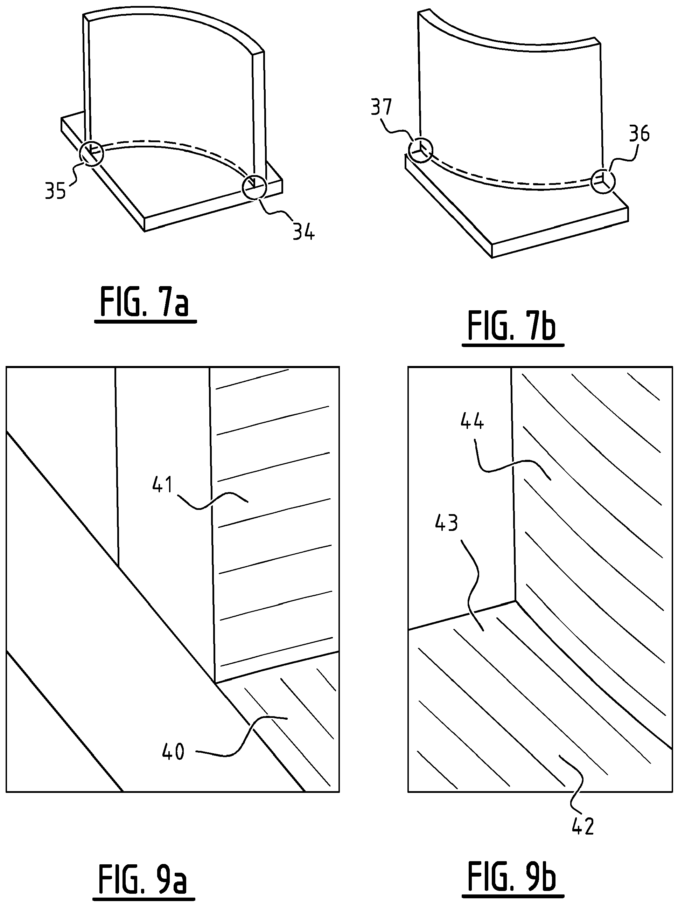

Figures 7a-b show how waypoints can be combined into different curved trajectories using more complex templates. Based on waypoints 34 and 35, shown in figure 7a, a trajectory can be generated based on a quarter-circle template. This trajectory would allow for the device to perform work on the inner side of the quarter circle of the workpiece. The same template can also be used to generate the trajectory derived from waypoints 37 and 36, shown in figure 7b. This trajectory would allow for the device to perform work on the outer side of the quarter circle of the workpiece.

Alternatively, or additional to the use of prestored templates, a route or trajectory can also be calculated by the controller using mathematical techniques, for instance interpolation techniques like cubic spline interpolation and the like.

In embodiments of the present disclosure the controller may determine two or more alternative trajectories for moving along the determined waypoints. The user may manually select one of these trajectories. In embodiments of the present disclosure the controller can assist in selecting the most appropriate trajectory from the set of alternative trajectories. The robot device may be provided with an imaging device 38 like camera, arranged to acquire images of the workpiece in the indicated direction. Two images that such a camera may acquire are shown in figures 9a and 9b. These are close ups of waypoints 35 and 37, respectively. By analysing these images, the shaded areas can be identified as surfaces of workpiece W and the system can determine from what side and/or angle the workpiece has to be approached. In this manner the controller is able to select the most appropriate trajectory from the set of alternative trajectories in combination with a selection of the most appropriate orientation of the end effector (which orientation may need to vary as the end effector moves along the selected trajectory) that causes the most optimal interaction with the workpiece (for instance, the most optimal welding quality in case the end effector is a welding torch).

Furthermore, while existing robot devices tend to make use of "offline" programming tools to simulate and program the robot device, calibration of the actual robot device is usually still required. Additionally, existing robot devices that use digital recognition of the workpiece, can only work on workpieces that are known *a priori.* In embodiments of the present disclosure the method can be used with previously unknown workpieces as well and no additional *prior* knowledge, such as (CAD-) drawings or specifications, is needed.

Further advantages of embodiments of the present disclosure include (in arbitrary order, not limitative: ordinary craftsman skills are sufficient to be able a person to set the waypoints, as they can be defined in terms a craftsman is familiar with, and contactless indicating a waypoint location avoids the risk of damaging the end effector or other parts thereof in case of an operator mistake during waypoint definition.

It is to be understood that this invention is not limited to particular aspects described, and, as such, may vary. It is also to be understood that the terminology used herein is for the purpose of describing particular aspects only, and is not intended to be limiting, since the scope of the present invention will be limited only by the appended claims.

## Claims

1. Method for defining a location of each waypoint from a set of one or more waypoints on a workpiece arranged on a support, wherein use is made of a robot device comprising:
a robot arm comprising:
a stationary base;
a plurality of links of which one is attached to the stationary base; and
a plurality of joints forming interconnections between said links;
a reference point indicator element connected to or formed with the robot arm;
a direction-indicator connected to or formed with the robot arm; and
a controller configured to determine the location, optionally also the orientation, of the reference point indicator element and the direction indicator;
wherein the method comprises:
determining by the controller a reference plane extending through the one or more waypoints based on at least three reference locations determined using the reference point indicator element;
for each of the one or more waypoints for which a location is to be defined:
determining by the controller the orientation and location of the direction-indicator when the direction-indicator has been positioned to cause an imaginary line extending from the direction-indicator to point towards the waypoint;
determining by the controller based on the determined reference plane and the determined orientation and location of the direction-indicator, the location of said waypoint as the location of the intersection point between the imaginary line and the reference plane.

2. Method as claimed in claim 1, wherein determining by the controller of a reference plane extending through the one or more waypoints comprises:
positioning the reference point indicator element at at least three distinct reference locations on the workpiece;
determining the at least three distinct reference locations from the respective position of the reference point indicator element; and
determining the reference plane based on the at least three reference locations;
wherein the reference point indicator element preferably comprises a contact surface, and wherein positioning the reference point indicator element at the at least three distinct reference locations preferably comprises consecutively moving the contact surface of the reference point indicator element to contact the workpiece at each of the at least three distinct reference locations.

3. The method of claim 1, wherein:
the reference point indicator element comprises a 3D imaging device, and the determining of a reference plane extending through the one or more waypoints based on at least three reference locations determined using the reference point indicator element comprises:
- acquiring by the 3D imaging device of image information of the workpiece to generate a 3D map of the workpiece;
- generating by at least one of the 3D imaging device or the controller a 3D map of the workpiece;
- receiving by the controller information representative of at least three reference locations from the 3D map, and;
- determining the reference plane based on the received at least three reference locations;
and/or
the reference point indicator element comprises a depth camera configured to acquire a plurality of values representing a distance between the depth camera and a corresponding plurality of points, and the determining of the reference plane extending through the one or more waypoints comprises:
- positioning the depth camera to point towards the workpiece and acquiring the plurality of values;
- determining at least three distinct reference locations on the workpiece based on the position of the depth camera, and the acquired plurality of values, and;
- determining the reference plane based on the at least three reference locations.

4. The method as claimed in any of the preceding claims, wherein determining the location and/or orientation of the reference point indicator element and/or the direction-indicator comprises determining the location and/or orientation in a stationary coordinate system based on sensors arranged in a kinematic chain formed by the links and joints of the robot arm.

5. The method of any of the preceding claims, wherein:
the direction-indicator comprises a laser generator configured to emit at least one laser beam of visible laser light and the method further comprises emitting the at least one laser beam of visible laser light essentially along the imaginary line;
and/or,
the direction-indicator comprises a light projector, and the method further comprising projecting light from the light projector along the imaginary line.

6. The method of any of the preceding claims, wherein:
the direction-indicator comprises a laser generator configured to emit two converging laser beams of visible laser light, wherein the laser generator is preferably further configured to emit the two laser beams to intersect in a point on the imaginary line;
and/or
the direction-indicator comprises an imaging device, for instance a 2D camera, arranged to acquire one or more images in the indicated direction, and the method further comprising acquiring one or more images using the imaging device, wherein the method optionally comprising displaying the one or more acquired images together with an indication of where in the acquired image the imaginary line is;
wherein the imaging device has a focal point, and wherein the intersection point of the two laser beams preferably coincides with said focal point, the method optionally comprising determining the intersection point when the waypoint is at the focal point of the imaging device.

7. The method of any of the preceding claims, wherein the direction-indicator comprises a visor arranged on the robot arm for a user to look in the indicated direction when looking through or along the visor.

8. The method as claimed in any of the preceding claims, comprising storing and/or retrieving information representative of the determined reference plane on or from a storage medium;
the method preferably further comprising determining the intersection point between the imaginary line and the determined reference plane based on both the location and the orientation of the direction indicator and on the information representative of the determined reference plane stored on the storage medium.

9. The method as claimed in any of the preceding claims, wherein the robot arm further comprises an end effector, preferably being at least one of a welding or soldering torch, a circle saw or jig saw, a drill, a glue gun, a sanding-tool, grinding tool, a cleaning laser, or other processing tool;
the method further comprising determining respective locations of two or more waypoints and determining one or more trajectories between the waypoints for the end effector to follow when interacting with the workpiece;
wherein determining the one or more trajectories between the waypoints for the end effector to follow preferably further comprises determining from image information received from an imaging device, for instance the imaging device as claimed in claim 10 or 11, an optimal orientation of the end effector relative to the workpiece when the end effector travels along the trajectory.

10. The method of claim 9, wherein the trajectory is generated based on the one or more waypoints and a trajectory template;
wherein the trajectory template is preferably one of:
a line template, based on which a trajectory is generated that passes through each of the one or more waypoints, preferably in order in which the locations of the one or more waypoints were defined;
a boundary-only polygon template, based on which a trajectory is generated that starts and ends at the same waypoint, and passes through each of the one or more waypoints, preferably in an order in which the locations of the one or more waypoints were defined; and
a closed-polygon template, based on which a trajectory is generated that covers the interior, and preferably also the boundary of a simple polygon defined by the one or more waypoints.

11. The method of claim 9 or 10, wherein generating the trajectory further comprises determining an angle at which the end effector approaches the workpiece when being moved along the trajectory;
wherein the angle of approach is preferably determined based on the trajectory template, and/or wherein the robot device preferably further comprises an imaging device, for instance a 2D camera, arranged to acquire image data representative of the shape and size of the workpiece, the method further comprising:
- acquiring image data representative of the shape and size of the workpiece using the imaging device; and
- determining the angle of approach based on the acquired image data.

12. Method of operating a robot device, the method comprising:
- determining one or more trajectories between locations of waypoints on a workpiece, wherein the locations of the waypoints are preferably determined in accordance with any of claims 15-22;
- causing a robot arm to move an end effector along the one or more trajectories, preferably in a determined orientation, while the end effector is caused to interact with the workpiece; wherein the interaction between the end effector and the workpiece preferably comprises at least one of welding, soldering, sawing, drilling, gluing, sanding, grinding, or cleaning.

13. A robot device comprising
- a robot arm comprising a stationary base, a plurality of links of which one is attached to the stationary base, and a plurality of joints forming interconnections between said links;
- a reference point indicator element connected to or formed with the robot arm;
- a direction-indicator connected to or formed with the robot arm; and
- a controller configured to determine the location, optionally also the orientation, of the reference point indicator element and the direction indicator, wherein the controller is configured to perform the method as claimed in any of the preceding claims.

14. The robot device as claimed in claim 13, wherein the robot arm is further configured to allow the reference point indicator element to be movable to physically contact the workpiece at each of the reference locations, wherein the reference point indicator element preferably comprises a contact surface configured to be moved into contact with the workpiece.

15. The robot device as claimed in claims 13 or 14, wherein the reference point indicator element comprises a 3D imaging device, and/or;
wherein the direction-indicator comprises at least one of:
- a visor;
- a light projector;
- an imaging device, for instance a 2D camera;
- a laser generator configured to emit at least one laser beam of visible laser light essentially along the imaginary line;
- a laser generator is configured to emit two converging laser beams of visible laser light, wherein the laser generator is preferably further configured to emit the two laser beams to intersect in a point on the imaginary line,
and/or;
wherein the robot arm comprises an end effector configured to perform interaction with the workpiece, wherein the interaction preferably is at least one of the following: welding, soldering, sawing, drilling, gluing, sanding, grinding, or cleaning.
